Europäisches Patentamt

European Patent Office

Office européen des brevets

(19)

(11) Publication number: **0 461 762 A1**

(12)

# EUROPEAN PATENT APPLICATION

(21) Application number: 91304337.8

(22) Date of filing: 15.05.91

(51) Int. Cl.⁵: **G09B 9/00, G01T 1/00,** G09B 23/00

(30) Priority: 15.05.90 GB 9010872

(43) Date of publication of application:
18.12.91 Bulletin 91/51

(84) Designated Contracting States:
DE FR IT SE

(71) Applicant: COLEMAN, Frederick John
26 Testcombe Road
Alverstoke, Gosport, Hants PO12 2EL (GB)
Applicant: Macro, Graham
6 Middlecroft Lane
Gosport, Hampshire. PO12 3DJ (GB)

(72) Inventor: COLEMAN, Frederick John
26 Testcombe Road
Alverstoke, Gosport, Hants PO12 2EL (GB)
Inventor: Macro, Graham
6 Middlecroft Lane
Gosport, Hampshire. PO12 3DJ (GB)

(74) Representative: Cross, Rupert Edward Blount
et al
BOULT, WADE & TENNANT 27 Furnival Street
London EC4A 1PQ (GB)

(54) A method of training personnel to detect the presence of radioactive contamination.

(57) The detection of radioactive contamination on an object, such as a wipe, is simulated by the detection of an active substance, on said object, which emits electromagnetic radiation having a wavelength in the range of from 1mm to 100nm. This simulation may be used in a method of training personnel to detect the presence of radioactive contamination and to decontaminate the contaminated environment without the personnel being exposed to radioactive substances. Existing apparatus which makes use of scintillation screens to detect the presence of radioactive materials can be easily modified for use in the training method.

EP 0 461 762 A1

*FIG.1.*

The present invention relates to a method of training personnel to detect the presence of radioactive contamination caused by the presence of substances which emit ionising radiation such as alpha, beta and gamma rays. The present invention further relates to a kit for training personnel to detect the presence of radioactive contamination and to an apparatus for use in a method of training personnel to detect the presence of radioactive contamination.

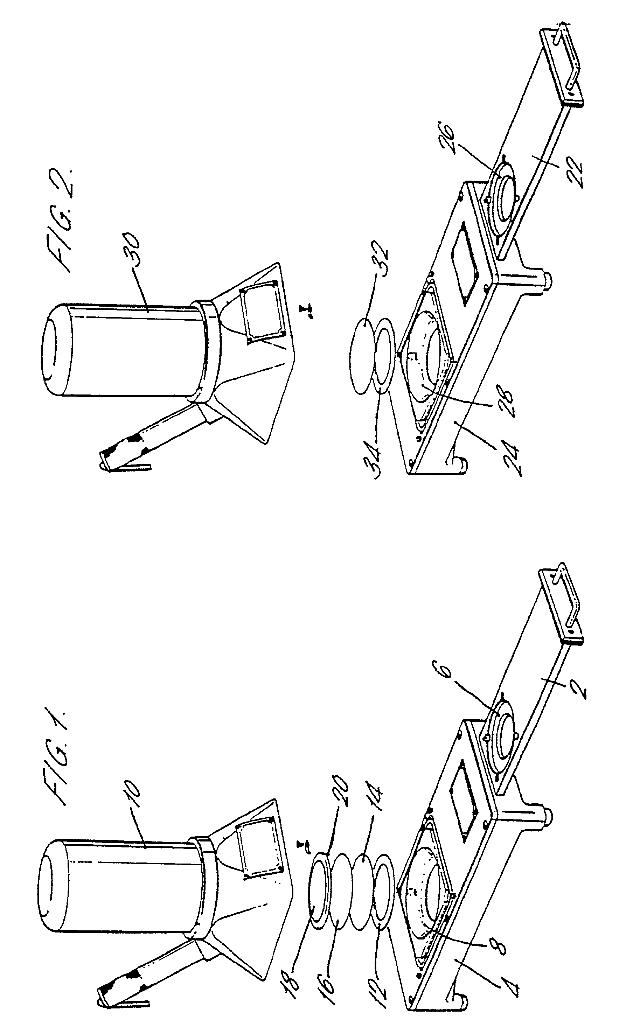

Figure 1 shows a standard apparatus, commonly known as an "alpha beta drawer assembly" for use in detecting the presence of radioactive contamination. The apparatus comprises a drawer 2 which is slidably fitted within a housing 4. A recess 6 is provided in the drawer 2 for holding a sample to be examined. An opening 8 is provided in the housing above the position of the recess 6 when the drawer 2 is in the closed position. A photomultiplier assembly 10 is fitted above the opening 8 to define a light-tight compartment. A sandwich of components provided between the opening 8 and the photomultiplier assembly 10 comprises a copper washer 12, an aluminised film 14, an aluminium foil 16 and a scintillation screen 18 having a zinc sulphide coating on its inner face 20. When a radioactive sample is placed in the recess 6, the impact of individual particles of ionising radiation from the sample on the scintillation screen 18 produces photons of visible light which are detected by the photomultiplier assembly 10. Electronic pulses produced by the photomultiplier assemby 10 as a result of each particle of ionising radiation are processed by a standard counting system (not shown) to produce a count rate indicative of the quantity and type of radioactive material in the sample.

There is a need for a method of training personnel in the detection of radioactive contamination and in decontamination procedures once an ionising radiation source has been detected.

Conventionally, such training is carried out using a number of sources of ionising radiation, such as short-half-life gamma ray emitters. The sources of ionising radiation are distributed over an area to be searched, or in the clothing of a person to be decontaminated. A detector appropriate to the radiation emitted by the source or sources is used by the person being trained to seek out the source or sources.

Such known methods have the disadvantage that they use actual sources of ionising radiation which is particularly undesirable in the training of personnel in the decontamination of a person. Furthermore, the use of ionising radiation sources is costly, not only in the direct cost of the sources, but also in the indirect cost of the necessary safety procedures and the time necessary for decontamination after training is completed.

According to a first aspect of the present invention there is provided a method of training personnel to detect the presence of radioactive contamination wherein the detection of radioactive contamination on an object is simulated by the detection of an active substance, on said object, the active substance emitting electromagnetic radiation having a wavelength in the range of from 1mm to 100nm. This range of wavelengths includes electromagnetic radiation of infra-red wavelengths, visible radiation and non-ionising ultra-violet radiation having an energy down to 12eV.

Said first aspect of the present invention makes use of the appreciation that many detectors for ionising radiation use scintillation screens to detect the presence of the ionising radiation. A scintillation screen responds to the impact of ionising radiation by producing photons of visible light. Accordingly, a known apparatus for detecting ionising radiation using a scintillation counter can be easily modified for use with the method of said first aspect of the present invention by replacing the scintillation screen with a light filter. Thus, personnel can be trained using training apparatus which is realistically similar to the apparatus that would be used in the real situation.

Accordingly, a second aspect of the present invention provides an apparatus for use in training personnel to detect the presence of radioactive contamination, the apparatus comprising means for holding an object in a light-tight environment, means for detecting electromagnetic radiation at one or more wavelengths in the range of from 1mm to 100nm and means for attenuating the effect of electromagnetic radiation emitted from said object whereby the detection of an active substance, on said object, which emits electromagnetic radiation having a wavelength in the range of from 1mm to 100nm simulates the detection of radioactive contamination of said object.

Said means for detecting electromagnetic radiation may comprise a photomultiplier assembly, a photocell or a photodiode. The provision of said means for attenuating the effect of electromagnetic radiation emitted from said object is dependent on the sensitivity of the detecting means and the amount of said active substance being used. The attenuating means may be a light filter which reduces the amount of electromagnetic radiation from said object reaching the detecting means and or an electrical attenuating means produced by eg. the inherent sensitivity of detecting means. It will be appreciated that in contrast to the prior art, in which one particle of ionising radiation results in an electronic pulse, the apparatus of said second aspect of the present invention produces a similar electronic pulse (to operate a standard counting system) for a plurality of photons of electromagnetic radiation.

The method of said first aspect of the present invention preferably uses an active substance produced from a precursor material which can be activated to emit electromagnetic radiation having a wavelength in the range of from 1mm to 100nm. Preferably, the precursor material is a chemiluminescent material, the method including the step of activating the chemiluminescent material using an activating substance, which may include an organic peroxy-compound.

The method of said first aspect of the present invention may be used to simulate the detection of radioactive contamination on nose wipes, body wipes or air monitoring samples. In such a simulation, both the chemiluminescent material and said activating substance are applied to said object which may be a sheet of filter paper, a tissue or a piece of cotton wool. The quantity of activating substance or chemiluminescent material applied to said object may be used to determine the amount of radioactive contamination to be simulated.

Alternatively, the method of said first aspect of the present invention may be used to simulate the detection of radioactive contamination on a surface and also to assist in the decontamination procedure. In such a simulation, one of the chemiluminescent material and the activating substance is applied to said surface and the other of the chemiluminescent material and the activating substance is applied to said object, whereby the chemiluminescent material and the activating substance are combined by contacting said surface with said object. Again, said object may be a sheet of filter paper tissue or a piece of cotton wool to simulate a wipe.

With this embodiment of said first aspect of the present invention, the initial detection of said radioactive contamination is simulated by the wiping of said object across the surface being investigated and the detection of electromagnetic radiation from said object. The decontamination of the surface is then simulated by the cleaning of the contaminated surface using further objects. Each object may be examined to determine whether or not the surface is still contaminated by said one of the chemiluminescent material and the activating substance. The decontamination procedure may be continued until no more of said one of the chemiluminescent material and the activating substance is found on said surface.

Advantageously, said one of the chemiluminescent material and the activating substance applied to said surface is colourless so that the personnel being trained are not assisted by the visual appearance of said surface.

A third aspect of the present invention provides a kit for use in a method of training personnel to detect the presence of radioactive contamination, the kit including a substance for emitting electromagnetic radiation having a wavelength in the range of from 1mm to 100nm to simulate radioactive emissions.

Advantageously, said active substance comprises a chemiluminescent material and a separate activating substance. Means for defining the quantity of the said substance to be used are advantageously provided, which defining means may comprise a felt tip applicator or a brush.

The kit of said third aspect of the present invention advantageously includes the apparatus of said second aspect of the present invention.

Embodiments of the present invention will now be described, by way of example only, and with reference to the accompanying drawings in which:

Figure 1 shows a prior art alpha beta drawer assembly;

Figure 2 shows a modified alpa beta drawer assembly for use in the method of the present invention;

Figures 3a, 3b, 3c and 3d show steps in a preferred embodiment of the present invention in which a defined quantity of the activating substance is used;

Figure 4 is a graph showing the variation in count rate of the modified alpha beta drawer assembly with the defined quantity of activating substance used in a particular example of the present invention;

Figures 5a, 5b and 5c illustrate a modification of the method of Figure 3;

and Figure 6 is a graph showing the variation in count rate with time.

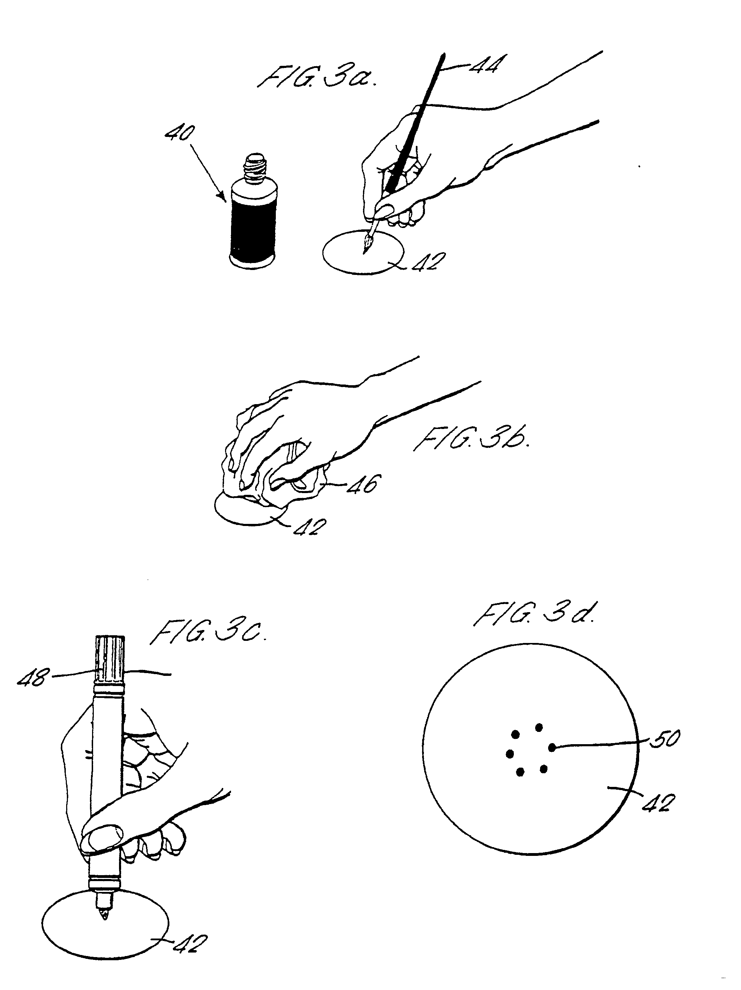

As shown in Figure 2, a modified alpha beta drawer assembly for use with the method of the present invention is similar to the standard alpha beta drawer assembly for use in detecting the actual presence of radioactive contamination which has been described in the introduction to the present specification. The modified drawer assembly includes a drawer 22 which is slidably fitted into a housing 24. The drawer 22 includes a recess for holding a sample to be examined under the simulated detection process. An opening 28 in the housing 24 is provided above the position of the recess 26 when the drawer 22 is fitted in the housing 24. Above the opening 28 is fitted a photomultiplier assembly 30 such that the recess 26 is light-tight when the drawer 22 is in the closed position. An attenuating light filter 32 is held in position above the opening 28 by a copper washer 34.

As indicated previously, the method of the present invention uses an active substance which emits electromagnetic radiation having a wavelength in the range of from 1mm to 100nm to simulate the presence of radioactive contamination. The object used as the sample in the simulation is placed in the recess 26 in the drawer 22. An attenuating light filter 32 reduces the amount of light from the object which reaches the photomultiplier assembly 30 and may be used to simulate a method of detecting radioactive contamination more realistically. The use of the filter 32 may reduce the need to modify the photomultiplier assembly 30. Alternatively, a photocell or photodiode with appropriate attenuating means may be used.

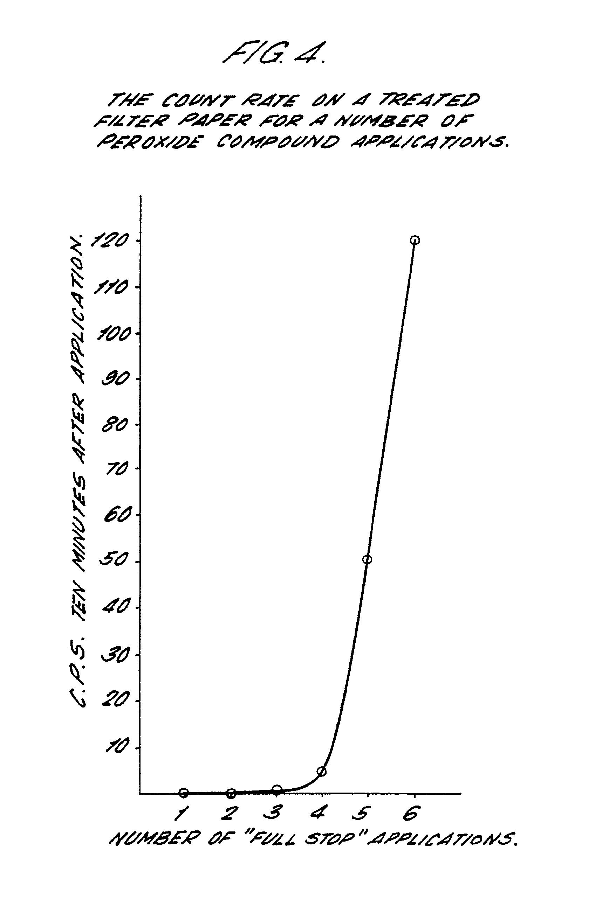

Figures 3a, 3b, 3c and 3d show steps in one method of preparing an object to be used in a simulated method of detecting radioactive contamination. A chemiluminescent dye is stored in a metal foil covered container 40. The dye is applied to an appropriate object which may be a sheet 42 of Whatman filter paper using a clean brush 44. The treated filter paper 42 is dried using soft tissue paper 46 and stored in a dry dark container. Depending on the chemiluminescent dye used, the treated filter paper 42 should be left to dry for about ten minutes before further treatment and should not be used after two hours.

Figure 3c shows the further treatment of the filter paper 42 or a sheet of tissue or piece of cotton wool when used to simulate a nose wipe, body wipe or an air monitoring sample. An activating substance, chosen for its effect on the chemiluminescent dye being used, is applied to the filter paper 42. The activating substance for most chemiluminescent dyes includes an organic peroxy-compound and is in the form of a liquid which can be applied using a felt tip applicator 48. The quantity of activating substance being applied to the filter paper can be controlled by the felt tip applicator 48, typically by pressing the pointed tip of the felt tip applicator against the filter paper to make a dot and controlling the number and size of the dots being deposited.

Figure 3d shows a useful number and size of dots 50 of the activating substance as applied to a filter paper 42.

When the activating substance is applied to the filter paper 42 which has already been treated with chemiluminescent dye, there is a chemical reaction which produces electromagnetic radiation having a wavelength in the range of from 1mm to 100nm. The quantities and concentration of dye and activating substance used are chosen so that this light is so faint as not to be visible to the human eye. However, it will be appreciated that the light produced from the reaction between the chemiluminescent dye and the activating substance may be so great as to swamp the photomultiplier tube or photocell without the use of an attenuating light filter 32 or some type of electrical filter. Photodiodes are less sensitive than photomultiplier tubes and so may be considered inherently to attenuate the effect of light produced from the filter paper, reducing the need for an external light filter.

The effect of the electromagnetic radiation produced from the chemical reaction on the modified apparatus is to produce electronic pulses which are indistinguishable from electronic pulses produced by ionising radiation in the standard drawer assembly. The photomultiplier tube is connected to a standard counting system (not shown) as in a real method of detecting radioactive contamination. As will be appreciated, the quantity and concentration of the chemiluminescent dye and the activating substance and type of filter 32 being used may be chosen so that the pulses from the assembly 30 and the resulting count rate of the standard counting system simulate the pulses and count rate produced by typical concentrations of ionising radiation found in radioactive contamination. The pulses may be processed to mimic half life periods of radioactivity.

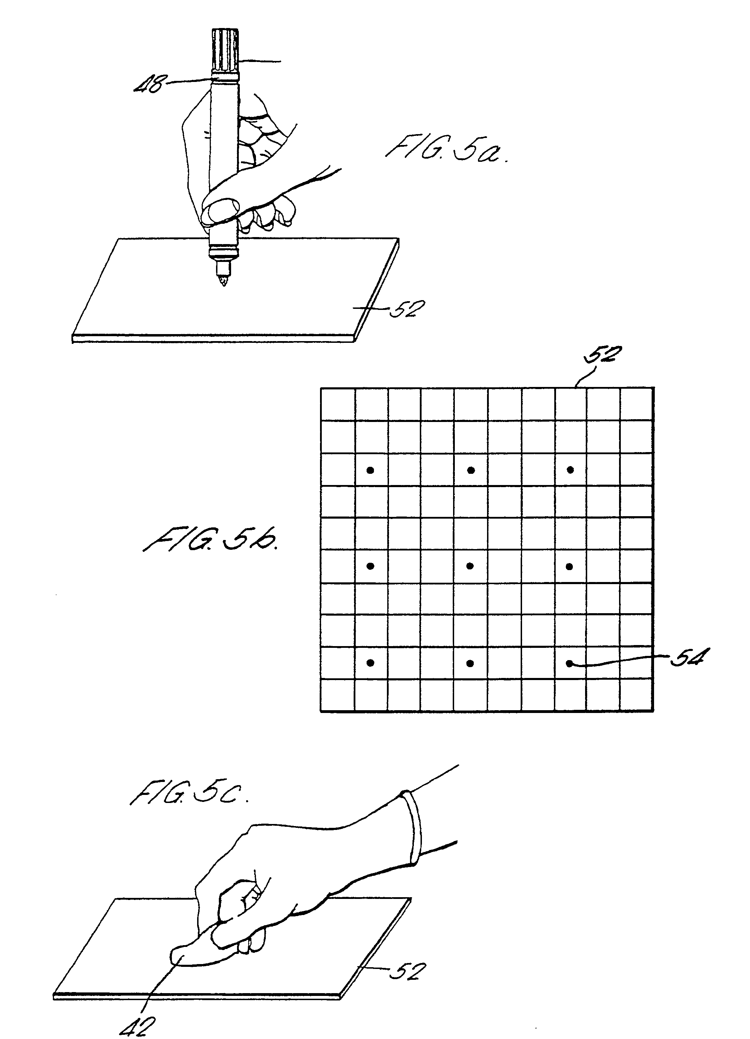

Figure 4 shows how the count rate of a treated filter paper varies with the number of dots of the activating substance being used in one example. With the concentrations of activating substance and chemiluminescent dye being used in that example, three dots are insufficient to produce a detectable count rate but the count rate increases with more than three dots.

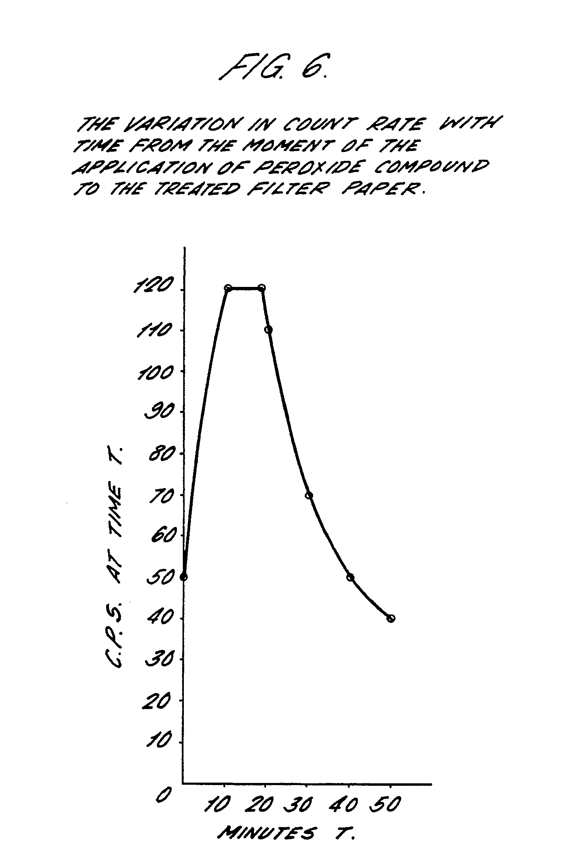

Figures 5a, 5b and 5c show a modification to the method of Figure 3 in which the method is used to simulate the detection of radioactive contamination of a surface 52, typically of area 10 cm x 10 cm. The filter paper 42 is initially treated with the chemiluminescent dye as described in the method of Figure 3. Activating substance is applied to the surface 52, which may be a melamine board or other clean impervious surface, using the felt tip applicator 48. Figure 5b shows a typical size of dot 54 and relative position on the contaminated surface 52 to simulate a typical contaminated surface. Because the activating substance is colourless and transparent, it cannot be seen on the surface 52. A sheet of filter paper 42 is used to wipe the surface 52. When the activating substance and the chemiluminescent dye come into contact, light is produced by the resulting chemical reaction and this light can be detected by the modified drawer assembly of Figure 2. In this way, the personnel will detect that the surface 52 has been contaminated. The further decontamination of the surface 52 is then simulated by the personnel being required to clean the surface 52 using further pieces of filter paper 42. After each piece of filter paper 42 has been used to wipe the surface 52, the level of radioactive contamination still remaining is measured by the used filter paper being placed in the modified drawer assembly. The procedure is repeated until no simulated radioactive contamination is found.

It will be appreciated that when the chemiluminescent dye and the activating substance are mixed, light may be emitted for several hours. However, this light emission is modified when the liquids are applied to sheets of filter paper. It has been found, for one example, that, after initial mixing of the two chemicals, the light output increases in the first ten minutes to a maximum value due to an absorption process. This maximum value of light output is maintained for about ten minutes. At the end of this period, the light output decays. The variation of light output of the mixed chemicals, as illustrated by the detected count rate, with time is shown in Figure 6.

An example of a suitable chemiluminescent dye and activating substance is supplied by Cyanamid under the trade name Cyalume. The combination of the chemiluminescent dye and the activating substance includes the following chemicals:

 dibutyl phthalate

 dimethyl phthalate

 oxalate, bis (2,4,5-trichlorophenyl-6 carbopentoxyphenyl)

 hydrogen peroxide

 anthracene, 1 chloro-9, 10-bis (phenylethenyl)

 sodium salicylate.

Modifications to the embodiments described within the scope of the present invention will be apparent to those skilled in the art. It will be appreciated that by the methods of the present invention, personnel may be trained to detect radioactive contamination and to decontaminate the contaminated areas without themselves being put at risk by the presence of real radioactive contamination.

## Claims

1. A method of training personnel to detect the presence of radioactive contamination wherein the detection of radioactive contamination on an object is simulated by the detection of an active substance, on said object, which emits electromagnetic radiation having a wavelength in the range of from 1mm to 100nm.

2. A method according to Claim 1 wherein said active substance is produced from a precursor material which can be activated to emit electromagnetic radiation having a wavelength in the range of from 1mm to 100nm.

3. A method according to Claim 2 wherein the precursor material is a chemiluminescent material, the method including the step of activating the chemiluminescent material using an activating substance.

4. A method according to Claim 3 wherein the activating substance includes an organic peroxycompound.

5. A method according to Claims 3 or 4 wherein the chemiluminescent material is applied to said object.

6. A method according to Claim 5 wherein a defined quanity of activating substance is applied to the chemiluminescent material on said object.

7. A method according to any one of Claims 3 to 5 for detecting the presence of radioactive contamination of a surface, the method including the steps of applying one of the chemiluminescent material and the activating substance to said surface and the further step of applying the other of the chemiluminescent material and the activating substance to said object whereby the chemiluminescent material and the activating substance are combined by contacting said surface with said object.

8. A method according to Claim 7 wherein said one of the chemiluminescent material and the activating substance applied to said surface is colourless.

9. A method according to Claims 7 or 8 wherein the activating substance is applied to said surface.

10. A method according to Claim 9 wherein a defined quantity of activating substance is applied to said surface.

11. A method according to any one of Claims 3 to 10 wherein at least one of said activating substance and said chemiluminescent material is used in the form of a liquid or a solution.

12. A method according to any one of the preceding claims wherein said object is a sheet of material.

13. A method according to Claim 12 wherein said sheet of material is a sheet of filter paper.

14. An apparatus for use in training personnel to detect the presence of radioactive contamination, the apparatus comprising means for holding an object in a light-tight environment, means for detecting electromagnetic radiation at one or more wavelengths in the range of from 1mm to 100nm and means for attenuating the effect of electromagnetic radiation emitted from said object whereby the detection of an active substance, on said object, which emits electromagnetic radiation having a wavelength in the range of from 1mm to 100nm simulates the detection of radioactive contamination of said object.

15. A kit for use in a method of training personnel to detect the presence of radioactive contamination, the kit including a substance for emitting electromagnetic radiation having a wavelength in the range of from 1mm to 100nm to simulate radioactive emissions.

16. A kit according to Claim 15 further comprising an object to which said substance can be applied.

17. A kit according to Claim 16 wherein said object is a sheet of material.

18. A kit according to Claim 17 wherein said sheet of material is a sheet of filter paper.

19. A kit according to only one of Claims 15 to 18 wherein said substance comprises a precursor material which can be activated.

20. A kit according to Claim 19 wherein said substance comprises a chemiluminescent material and a separate activating substance.

21. A kit according to Claim 20 wherein at least one of said activating substance and said chemiluminescent material is in the form of a liquid or solution.

22. A kit according to any one of Claims 15 to 21 further comprising means for defining the quantity of said substance to be used.

23. A kit according to Claim 22 wherein the defining means comprises a felt tip applicator.

24. A kit according to Claim 22 wherein the defining means comprises a brush.

25. A kit according to any one of Claims 19 to 24 wherein at least one of said activating substance and said chemiluminescent material is colourless.

26. A kit according to any one of Claims 15 to 25 further comprising the apparatus of Claim 14.

FIG. 1.

FIG. 2.

FIG. 3a.

FIG. 3b.

FIG. 3c.

FIG. 3 d.

FIG. 4.

THE COUNT RATE ON A TREATED FILTER PAPER FOR A NUMBER OF PEROXIDE COMPOUND APPLICATIONS.

*FIG. 5a.*

48

52

*FIG. 5b.*

52

54

*FIG. 5c.*

52

42

## FIG. 6.

THE VARIATION IN COUNT RATE WITH
TIME FROM THE MOMENT OF THE
APPLICATION OF PEROXIDE COMPOUND
TO THE TREATED FILTER PAPER.

European Patent
Office

## EUROPEAN SEARCH REPORT

Application Number

EP 91 30 4337

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| P,A | GB-A-2 230 126 (WARD)<br>* page 2, line 21 - page 3, line 8;<br>page 3, lines 22-29; claims 1-6,<br>amended claims 1-6 *<br>--- | 1,15 | G 09 B 9/00<br>G 01 T 1/00<br>G 09 B 23/00 |
| Y | GB-A-1 403 265 (WHITLOCK)<br>* page 1, line 9 - page 2, line 12;<br>figures 1,2 *<br>--- | 14 | |
| Y | GB-A-2 218 803 (WHITLOCK)<br>* abstract; page 1, line 1 - page 4,<br>line 11; page 8; claims 1-3; figure 1 * | 14 | |
| A | | 15-21 | |
| A | US-A-2 900 740 (BRAULT et al.)<br>* column 1, lines 14-41; column 2, line<br>47 - column 3, line 12; column 5, lines<br>7-12; claims 1-3; figures 1,2 *<br>--- | 1,14,15 | |
| A | US-A-3 208 159 (FILIPOV)<br>----- | | |

TECHNICAL FIELDS
SEARCHED (Int. Cl.5)

G 09 B 9/00
G 01 T 1/00
G 09 B 23/00

The present search report has been drawn up for all claims

| Place of search | Date of completion of the search | Examiner |
|---|---|---|
| BERLIN | 12-09-1991 | BEITNER M.J.J.B. |

CATEGORY OF CITED DOCUMENTS

X : particularly relevant if taken alone
Y : particularly relevant if combined with another
　document of the same category
A : technological background
O : non-written disclosure
P : intermediate document

T : theory or principle underlying the invention
E : earlier patent document, but published on, or
　after the filing date
D : document cited in the application
L : document cited for other reasons

& : member of the same patent family, corresponding
　document

EPO FORM 1503 03.82 (P0401)